# FASCICULE DE BREVET EUROPEEN

(11) **EP 3 608 195 B1**
(45) Date de publication et mention de la délivrance du brevet: **26.04.2023**
(21) Numéro de dépôt: 19190427.5
(22) Date de dépôt: 07.08.2019
(51) Int. Cl.: B61F 5/22, B61F 5/10

(54) **PROCÉDÉ DE COMMANDE DE LA HAUTEUR D'UN VÉHICULE ET VÉHICULE ASSOCIÉ**
VERFAHREN ZUR HÖHENSTEUERUNG EINES FAHRZEUGS, UND ENTSPRECHENDES FAHRZEUG
METHOD FOR CONTROLLING THE HEIGHT OF A VEHICLE AND ASSOCIATED VEHICLE

(30) Priorité: 09.08.2018 FR 1857406
(43) Date de publication de la demande: 12.02.2020
(73) Titulaire: ALSTOM Transport Technologies, 93400 Saint-Ouen (FR)
(72) Inventeur: DAUSOA, Sacheen, 71200 Le Creusot (FR); BONIN, Eric, 38200 Jardin (FR)
(74) Mandataire: Lavoix

(56) Documents cités:
- WO-A1-2010/142657
- FR-A1- 3 053 301
- JP-A- H05 116 627
- JP-A- 2006 027 477
- US-A1- 2017 174 231

## Description

La présente invention concerne un procédé de commande de la hauteur d'un plancher d'une voiture d'un véhicule par rapport à un quai, la voiture comprenant une caisse comprenant le plancher, au moins un bogie et au moins une suspension secondaire interposée entre le bogie et la caisse.

Dans le secteur du transport de voyageurs, plus particulièrement le transport ferroviaire, un véhicule est amené à réaliser plusieurs arrêts dans des stations, ou gares, pour permettre la sortie ou l'entrée de voyageurs et/ou d'objets.

L'accès des voyageurs et/ou des objets à une voiture s'opère au niveau du plancher de la voiture qui se trouve disposé globalement en regard du quai de la station.

Cependant, la différence de hauteurs, susceptible d'exister entre le plancher et le quai, peut se révéler inacceptable pour certains usagers, notamment ceux dits à mobilité réduite. En particulier, la norme ADA, pour American Disability Act, impose une différence de hauteur entre le quai et le plancher inférieure à 16 millimètres (mm).

La différence de hauteurs peut en outre rendre difficile le transfert d'objets volumineux et/ou lourds du quai à la caisse et inversement.

Il convient alors d'adapter la hauteur du plancher à la ou les hauteurs de quai. Cependant, la hauteur du quai est susceptible de varier d'une station à une autre. De plus, la hauteur du plancher d'accès est sujette à des variations notables, sous l'effet de différents paramètres. On citera notamment la valeur de la charge de la voiture correspondant notamment à la masse des passagers et des bagages occupant la voiture, la répartition de cette charge, ou encore l'usure des roues. Ainsi, une solution ne prenant pas en compte ces paramètres ne permet pas de respecter la norme ADA.

Le document JP 2006 027477 A divulgue un procédé de commande de la hauteur d'un plancher d'une voiture d'un véhicule par rapport à un quai.

Le document FR 3 053 301 propose un procédé de commande de la hauteur d'un plancher par rapport à un quai permettant notamment de répondre à la norme ADA, dans lequel la hauteur de la suspension secondaire est ajustée pour adapter la hauteur du plancher. L'ajustement de la hauteur de la suspension secondaire est réalisé en fonction de l'estimation de la hauteur du sommet du châssis de bogie, cette estimation dépendant essentiellement de paramètres internes du véhicule.

Cependant, lesdits paramètres internes sont susceptibles d'évoluer au cours de l'utilisation du véhicule ferroviaire, de sorte qu'ils ne correspondent plus au paramétrage initial. Un ajustement des paramètres, par exemple par mesure au cours d'opérations de maintenance ou grâce à des estimations est réalisé, ce qui complexifie le procédé et/ou est susceptible de rallonger lesdites opérations de maintenance.

Un but de l'invention est donc de proposer un procédé permettant de modifier de façon simple la hauteur d'un véhicule de transport, notamment pour assurer un accès aisé aux usagers de ce véhicule.

A cet effet, l'invention a pour objet un procédé selon la revendication 1.

La présence du capteur de distance permet de réajuster le calcul de la différence à l'environnement extérieur directement mesuré. L'ajustement de la suspension secondaire réalisé est ainsi le plus proche possible de la réalité. Ainsi, la hauteur entre le quai et le plancher est minimisée. La hauteur entre le quai et le plancher est inférieure à 16 mm comme prévu par la norme ADA et, plus particulièrement, inférieure à 5 mm.

Suivant des modes de réalisation particuliers de l'invention, le procédé comprend l'une ou plusieurs des caractéristiques suivantes selon toute combinaison techniquement possible :
- le capteur de distance est positionné pour être au-dessus du quai suivant une direction d'élévation du quai quelle que soit la hauteur de la suspension secondaire et est, de préférence, un capteur laser, ultrason ou optique,
- le véhicule comprend un processeur apte à faire le calcul de la différence entre la hauteur du quai et la hauteur de plancher à partir de la distance mesurée, le processeur activant un dispositif d'actionnement d'un dispositif de contrôle de la hauteur de la suspension secondaire,
- la suspension secondaire comprend au moins un coussin et en ce que le dispositif de contrôle de la hauteur de la suspension secondaire comprend au moins une électrovalve reliée au dispositif d'actionnement activable par le processeur, l'électrovalve étant apte à introduire du fluide dans le coussin et/ou à expulser du fluide depuis le coussin,
- le procédé comprend les étapes suivantes :
   - modification supplémentaire de la hauteur du plancher par rapport à l'étape d'ajustement,
   - calcul de la modification supplémentaire à partir d'au moins une mesure supplémentaire, la mesure supplémentaire étant différente de la mesure de la distance entre le capteur de distance et le quai, et
   - ajustement supplémentaire de la hauteur de la suspension secondaire pour compenser la modification supplémentaire,
- la mesure supplémentaire est réalisée par un capteur de mesure de la hauteur de la suspension secondaire et/ou par un capteur de mesure de la variation de la hauteur de la suspension secondaire et/ou par un capteur de charge de la caisse,
- les étapes de modification supplémentaire, de calcul de la modification supplémentaire et d'ajustement supplémentaire sont réalisées lorsque le capteur de distance apte à mesurer la distance entre ledit capteur et le quai est incapable de mesurer ladite distance,
- les étapes de mesure de la distance entre le capteur de distance et le quai par le capteur de distance, de calcul de la différence entre la hauteur du quai et la hauteur du plancher et d'ajustement de la hauteur de la suspension secondaire sont réalisées lorsque le véhicule entre à quai et dans lequel les étapes de modification supplémentaire, de calcul de la modification supplémentaire et d'ajustement supplémentaire sont réalisées lorsque le véhicule stationne à quai.

L'invention concerne en outre un véhicule selon la revendication 12.

L'invention sera mieux comprise à la lecture de la description qui va suivre, donnée à titre d'exemple et faite en se référant aux dessins annexés, sur lesquels :
- la figure 1 est une vue simplifiée, en coupe, d'une voiture de véhicule sur des rails à proximité d'un quai selon un premier mode de réalisation de l'invention ;
- la figure 2 est une vue simplifiée de côté de la voiture, des rails et partiellement du quai de la figure 1 ;
- la figure 3 est une vue schématique d'éléments du véhicule relatif au procédé de commande selon un premier mode de réalisation de l'invention ;
- la figure 4 est une vue simplifiée similaire à celle de la figure 2 d'une voiture selon un deuxième mode de réalisation de l'invention ; et
- la figure 5 est vue schématique similaire à celle de la figure 3 relatif au procédé de commande selon un deuxième mode de réalisation de l'invention.

Dans la présente description, les termes « vertical » et « horizontal » sont définis par rapport à un véhicule ferroviaire. Ainsi, un plan horizontal est sensiblement parallèle au plan de roulement du véhicule et la direction verticale ou d'élévation est sensiblement perpendiculaire au plan de roulement. Par ailleurs, les termes « haut », référencé H, et « bas », référencé B, sont définis classiquement selon la direction verticale.

Le terme « longitudinal » est défini par rapport à la direction dans laquelle s'étend un véhicule ferroviaire et correspondant à la direction de circulation du véhicule ferroviaire, et le terme « transversal » est défini selon une direction sensiblement perpendiculaire à la direction longitudinale et à la direction verticale.

On a représenté sur les figures un repère, dans lequel la direction longitudinale est désignée par la référence X, la direction transversale est désignée par la référence Y, et la direction d'élévation est désignée par la référence Z.

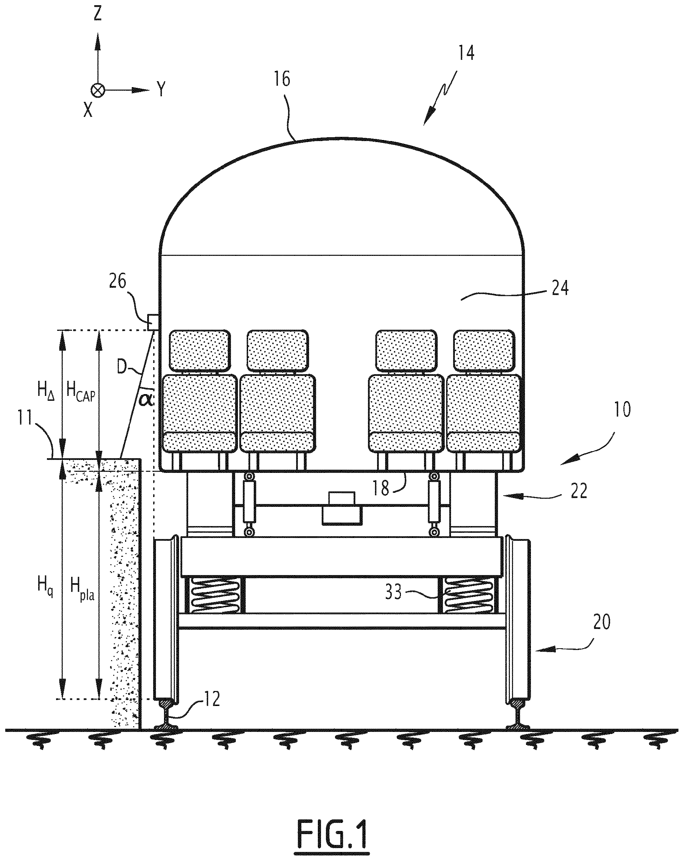

Un véhicule 10 selon un premier mode de réalisation de l'invention est représenté sur les figures 1 à 3.

Le véhicule 10 est, par exemple, un autobus ou un véhicule ferroviaire évoluant sur des rails 12 tel un trolleybus, un tramway, un métro ou un train.

Le véhicule est apte à circuler et à s'arrêter à une station comportant un quai 11 s'étendant à une certaine distance du plan de roulement du véhicule.

On appelle ici hauteur selon le contexte soit la dimension d'un objet selon la direction d'élévation Z, soit la distance selon la direction d'élévation Z entre un élément et un niveau de référence. Dans l'exemple représenté, le niveau de référence correspond au sommet des rails. Cependant, en particulier dans le cas d'un véhicule n'évoluant pas sur rails, le niveau de référence est susceptible d'être une autre référence, par exemple, le niveau de la route. En d'autres termes, le niveau de référence correspond au plan de roulement du véhicule ferroviaire.

Le véhicule 10 comprend au moins une voiture 14. De façon connue, chaque voiture 14 comprend une caisse 16, au moins un bogie 20 et au moins une suspension secondaire 22 interposée entre le bogie 20 et la caisse16.

Plus particulièrement, le véhicule 10 comprend une pluralité de voitures 14 et une pluralité de bogies 20, chaque caisse 16 reposant sur au moins deux bogies 20. En dehors des extrémités du véhicule, chaque bogie 20 s'étend, par exemple, entre deux caisses adjacentes, chacune des deux caisses reposant partiellement sur le bogie.

La caisse 16 comprend un espace interne 24 apte à accueillir des personnes et/ou des marchandises. La caisse 16 présente un plancher 18, le plancher 18 permettant l'accès des personnes et/ou des marchandises à l'espace interne 24.

On appelle hauteur du plancher Hₚₗₐ la distance selon la direction d'élévation Z entre le plancher 18 et le niveau de référence.

La caisse 16 est pourvue d'un capteur de distance 26.

On appelle hauteur du capteur H_{cap} la distance selon la direction d'élévation Z entre le capteur 26 et le plancher 18. Il s'agit d'une valeur déterminée liée à l'agencement du véhicule.

Le capteur de distance 26 est apte à mesurer une distance D entre ledit capteur 26 et un quai 11, lorsque le véhicule 10 est stationné à proximité dudit quai 11.

On appelle hauteur du quai H_{q} la distance selon la direction d'élévation Z entre la surface du quai 11 sur laquelle évolue les passagers et le niveau de référence.

Le capteur de distance 26 est apte à mesurer la distance au premier obstacle selon une direction de mesure, la direction de mesure étant choisie telle que, lorsque le véhicule est stationné à proximité d'un quai, en l'absence d'obstacle intermédiaire, le capteur de distance 26 mesure une distance entre le capteur et ladite surface du quai 11.

Le capteur de distance 26 présente ici un faisceau selon la direction de mesure permettant de réaliser la mesure selon ladite direction de mesure. Le capteur de distance 26 est, par exemple, un capteur laser, ultrason ou optique.

Le capteur est positionné de sorte que qu'elle que soit la hauteur de la suspension secondaire, la hauteur du capteur par rapport au sommet des rails est supérieure à la hauteur du quai par rapport au sommet des rails. La hauteur du capteur par rapport au sommet des rails est par exemple supérieure à 1 mètre.

En d'autres termes, le capteur de distance 26 est positionné pour être au-dessus du quai suivant une direction d'élévation du quai quelle que soit la hauteur de la suspension secondaire.

Ainsi la distance D a majoritairement une composante verticale.

Le capteur de distance 26 présente une précision de 2 mm.

La direction de mesure selon laquelle s'étend le faisceau du capteur de distance 26 forme, par exemple, un angle α avec la direction d'élévation Z, l'angle α étant compris entre 8° et 15°, comme représenté sur la figure 1.

La différence d'élévation selon la direction d'élévation entre le capteur 26 et la surface du quai 11 référencée H_{Δ} sur la figure 1 est telle que le cosinus de α est égal à ladite différence divisée par la distance D, soit cos α = H_{Δ} / D.

L'angle α étant fixe, il est donc possible de calculer la différence H_{Δ} à partir de la mesure de la distance D, grâce à la formule H_{Δ} = D × cos α.

La différence entre la hauteur du quai H_{q} et la hauteur du plancher Hₚₗₐ est égale à la différence entre la hauteur du capteur H_{cap} et la différence d'élévation H_{Δ}, soit H_{q} - Hₚₗₐ = H_{cap} - H_{Δ} ou encore H_{q} - Hₚₗₐ = H_{cap} - D × cos α. Si le plancher est plus bas que le quai, cette différence est négative. Si le plancher est plus haut que le quai, cette différence est positive.

Le bogie 20 comprend au moins un essieu 28, plus particulièrement deux essieux, un châssis de bogie 30 et au moins une suspension primaire 32 interposée entre chaque essieu 28 et le châssis de bogie 30.

La suspension primaire 32 présente une raideur K. Plus particulièrement ici, la suspension primaire comprend au moins un ressort 33 s'étendant entre l'essieu 28 et le châssis de bogie 30 sensiblement selon la direction d'élévation. Plusieurs ressorts peuvent être prévus, auquel cas les ressorts sont placés en parallèle les uns des autres. Chaque ressort 33 présente une raideur sensiblement égale à K divisé par le nombre de ressorts.

La suspension secondaire 22 s'étend plus particulièrement entre le châssis de bogie 30 et la caisse 14.

Lorsque le bogie 20 est à l'interface entre deux caisses 14, le véhicule comprend au moins une première suspension secondaire entre le bogie 20 et la première caisse et au moins une deuxième suspension secondaire entre le bogie 20 et la deuxième caisse.

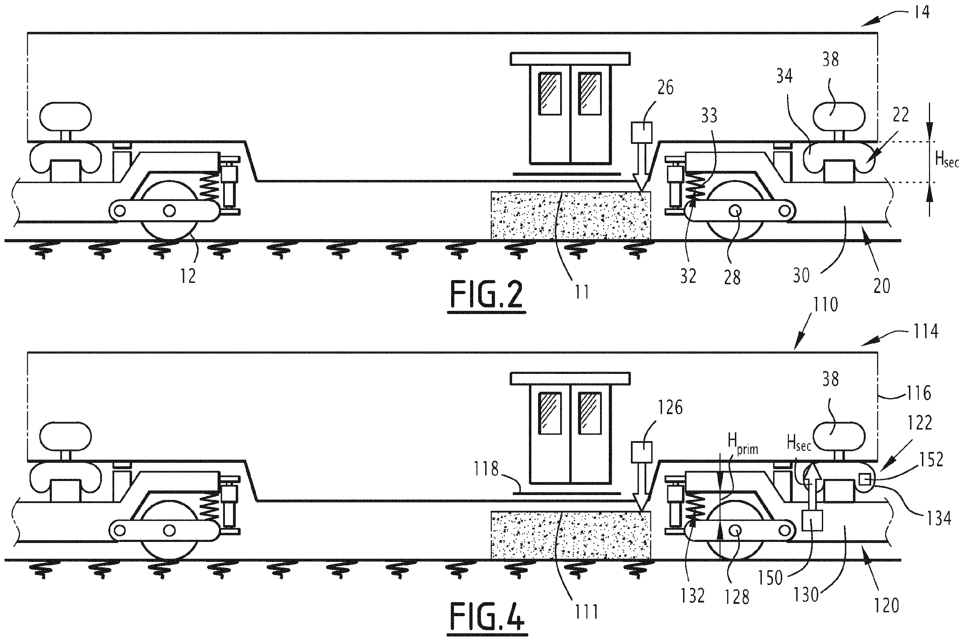

La suspension secondaire 22 comporte par exemple au moins un système de suspension 34 et un dispositif de contrôle 36 de la hauteur de la suspension secondaire 22. La hauteur H_{sec} de la suspension secondaire 22 est ici la distance selon la direction d'élévation de la suspension secondaire 22 entre la caisse 14 et le bogie 20, représentée sur la figure 2.

Le système de suspension 34 est, par exemple, un coussin pneumatique.

Dans ce cas, le dispositif de contrôle 36 de la hauteur de la suspension secondaire comprend un réservoir 38 relié au coussin pneumatique 34, une électrovalve 40 entre le réservoir 38 et le coussin 34 et un dispositif d'actionnement 42.

Le réservoir 38 est un réservoir de fluide, plus particulièrement d'air comprimé.

L'électrovalve 40 est apte à introduire du fluide depuis le réservoir 38 dans le coussin 34 et/ou à expulser du fluide depuis le coussin 34. Plus particulièrement, l'électrovalve 40 présente au moins trois positions : au moins une position d'introduction, au moins une d'expulsion et une position de maintien.

Lorsque l'électrovalve est dans la position d'introduction, du fluide est introduit depuis le réservoir 38 dans le coussin 34.

L'électrovalve 40 présente ici une pluralité de positions d'introduction correspondant ici à l'ensemble des positions entre la position de maintien et une position d'introduction maximale correspondant à un débit maximal de fluide introduit dans le coussin 34.

Lorsque l'électrovalve est dans la position d'expulsion, du fluide est expulsé depuis le coussin 34.

L'électrovalve 40 présente ici une pluralité de positions d'expulsion correspondant ici à l'ensemble des positions entre la position de maintien et une position d'expulsion maximale correspondant à un débit maximal de fluide expulsé du coussin 34.

Lorsque l'électrovalve est dans la position de maintien, elle ne permet pas la circulation de fluide.

Le dispositif d'actionnement 42 est relié à l'électrovalve 40 et est apte à actionner l'électrovalve, plus particulièrement, à déplacer l'électrovalve 40 entre la pluralité de positions.

Alternativement, l'introduction de fluide dans le coussin et l'expulsion de fluide depuis le coussin sont réalisées par deux électrovalves différentes actionnées soit par le même dispositif d'actionnement, soit par deux dispositifs d'actionnement séparés.

Alternativement, la suspension secondaire 22 est réalisée par un autre système, par exemple, un vérin contrôlé par un contrôleur.

Le véhicule 10 comprend, par ailleurs, une unité de traitement 44 comprenant un processeur 46 et une mémoire 48.

Le processeur 46 est apte à réaliser des calculs, à recevoir la mesure de distance du capteur 26, à exécuter un programme stocké dans la mémoire 48 et à contrôler le dispositif d'actionnement 42.

Le programme stocké dans la mémoire 48 comprend un algorithme permettant de calculer la différence entre la hauteur du quai H_{q} et la hauteur du plancher Hₚₗₐ à partir de la distance D, par exemple, en réalisant le calcul suivant : H_{cap} - D × cos α.

La hauteur du plancher par rapport au quai d'un tel véhicule est apte à être commandé d'après un procédé de commande tel que décrit ci-après.

Le procédé comprend les étapes successives suivantes :
- mesure de la distance D entre le capteur 26 et le quai 11 par le capteur 26,
- calcul de la différence entre la hauteur du quai H_{q} et la hauteur du plancher Hₚₗₐ à partir de la distance D mesurée entre le capteur 26 et le quai 11, et
- ajustement de la hauteur de la suspension secondaire H_{sec}, en fonction de la différence.

Plus particulièrement, la mesure de la distance D est transmise au processeur 46 qui exécute le programme stocké dans la mémoire 48.

Le processeur 46 calcule ainsi la différence entre la hauteur du quai H_{q} et la hauteur du plancher H_{pla.}

Lorsque cette différence est nulle, la hauteur de la suspension secondaire H_{sec} est maintenue constante.

Lorsque cette différence est positive, c'est-à-dire que le plancher 18 est plus bas que le quai 11, le processeur 46 contrôle le dispositif d'actionnement 42 pour augmenter la hauteur de la suspension secondaire H_{sec.} Ici le processeur 46 active le dispositif d'actionnement 42 qui déplace l'électrovalve 40 dans une position d'introduction de manière à introduire du fluide dans le coussin 34. Le volume du coussin 34, et ainsi la hauteur de la suspension secondaire H_{sec}, donc la hauteur Hₚₗₐ du plancher 18, augmentent.

Lorsque cette différence est négative, c'est-à-dire que le plancher 18 est plus haut que le quai 11, le processeur 46 contrôle le dispositif d'actionnement 42 pour diminuer la hauteur de la suspension secondaire H_{sec.} Ici le processeur 46 active le dispositif d'actionnement 42 qui déplace l'électrovalve 40 dans une position d'expulsion de manière à expulser du fluide depuis le coussin 34. Le volume du coussin 34, et ainsi la hauteur de la suspension secondaire H_{sec}, donc la hauteur Hₚₗₐ du plancher 18, diminuent.

L'ajustement de la hauteur de la suspension secondaire H_{sec} est calculé pour que la hauteur du plancher Hₚₗₐ soit sensiblement égale à la hauteur du quai H_{q}, plus particulièrement que la valeur absolue de la différence soit inférieure à 16 mm, préférentiellement inférieure à 2 mm.

Pendant l'ajustement, le plancher 18 est déplacé sensiblement perpendiculairement au quai 11, plus précisément à la surface du quai. Le plancher 18 est par exemple déplacé en translation perpendiculairement à ladite surface.

Après ajustement, l'ensemble du plancher 18 a une hauteur Hₚₗₐ sensiblement égale à la hauteur de la plate-forme H_{q}. Le plancher 18 s'étend sensiblement dans le même plan que la plate-forme 11.Les étapes de mesure de la distance D par le capteur 26, de calcul de la différence et d'ajustement de la hauteur de la suspension secondaire sont, par exemple, réalisées au moins à chaque entrée à quai du véhicule 10.

La mesure par le capteur 26 permet d'ajuster la hauteur du plancher 18 à différentes hauteurs de quai 11. Cela permet notamment d'ajuster la hauteur du plancher 18 à chaque arrêt lorsqu'il est prévu que le véhicule réalise des arrêts à des quais présentant des hauteurs différentes.

La mesure par le capteur 26 prend en compte l'ensemble des paramètres internes du véhicule pouvant influencer sur la hauteur du plancher, notamment la masse portée par la voiture 14, l'usure des roues, des suspensions primaires et/ou des suspensions secondaires, au moment de la mesure.

Lorsque le véhicule est à quai, des personnes et/ou des marchandises sont susceptibles de monter et/ou de descendre de la voiture. Ainsi la masse portée par la voiture est susceptible de varier et d'entraîner une variation de la hauteur du plancher alors que le véhicule est à quai, par exemple, une augmentation ou une diminution de la hauteur du plancher d'une distance comprise entre 0 et 25 mm. Plus particulièrement, la variation est due d'une part à la détente ou à la compression du au moins un ressort 33 de la suspension primaire pour une distance comprise entre 0 et 20 mm, et d'autre part à la plage neutre de la suspension pneumatique pour une distance comprise entre 0 et 5 mm.

Cependant, en cas de forte affluence, une personne est susceptible de se trouver sur la direction de mesure du capteur de distance et de fausser la mesure, tel qu'il ne serait pas possible de réitérer le procédé de commande tel que décrit précédemment pour ajuster de nouveau le niveau du plancher.

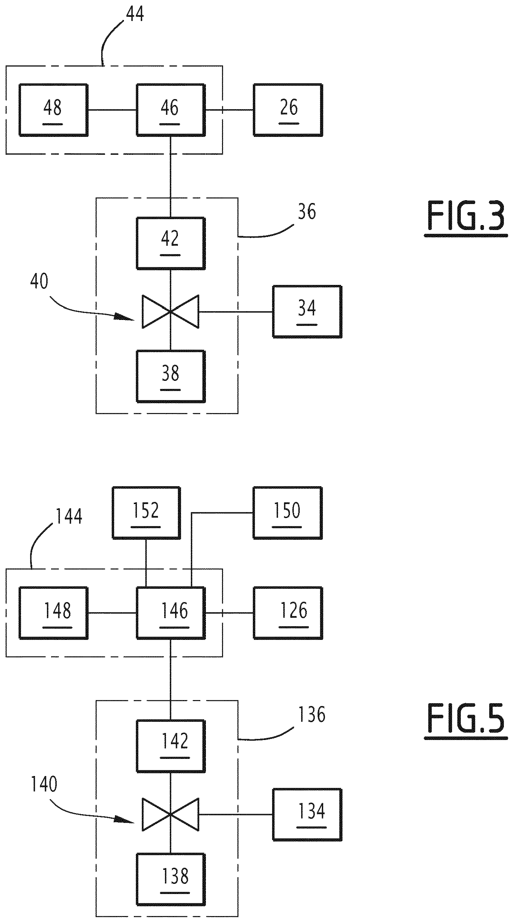

Une voiture 114 d'un véhicule 110 selon un deuxième mode de réalisation de l'invention est représentée sur les figures 4 et 5 et offre une amélioration du premier mode de réalisation permettant d'ajuster la hauteur alors que le véhicule est à quai en cas de forte affluence.

Les éléments du deuxième mode de réalisation similaires à des éléments du premier mode de réalisation sont référencés par la suite avec une incrémentation de 100 et ne sont pas de nouveau décrits par la suite.

Le véhicule 110 comprend additionnellement à ce qui a été décrit précédemment au moins un capteur supplémentaire 150, 152.

Plus particulièrement ici, le véhicule 110 comprend un capteur de mesure de la hauteur de la suspension secondaire 150 et/ou un capteur de charge 152 de la caisse.

Chaque capteur supplémentaire 150, 152 est apte à effectuer une mesure supplémentaire différente de la mesure de la distance D entre le capteur de distance 126 et le quai 111.

La mesure supplémentaire est ici une mesure ne dépendant pas du quai 111, plus particulièrement il s'agit d'une mesure propre à la voiture 114.

Le capteur 150 de mesure de la hauteur de la suspension secondaire est ici un capteur ayant une direction de mesure s'étendant sensiblement selon la direction d'élévation Z. Il s'agit, par exemple, d'un capteur laser, ultrason ou optique.

Alternativement au capteur de mesure de la hauteur de la suspension secondaire 150, le véhicule 110 comprend un capteur de mesure de la variation de la hauteur de la suspension secondaire.

Le capteur de charge 152 est ici un capteur de pression configuré pour mesurer la pression interne du ou des coussins 134. A partir de ces mesures de pression, le capteur de charge 152 est apte à en déduire une mesure de la charge P exercée par la caisse 116 sur le bogie 120.

Le processeur 146 est également apte à recevoir la mesure des capteurs supplémentaires 150, 152.

Le programme stocké dans la mémoire 148 comprend un algorithme supplémentaire permettant de calculer une modification de la hauteur du plancher à partir des mesures supplémentaires et de commander un ajustement supplémentaire pour compenser la modification.

La hauteur du plancher par rapport au quai d'un tel véhicule 110 est apte à être commandé d'après un procédé de commande tel que décrit ci-après.

Les étapes de mesure de la distance D par le capteur 126, calcul de la différence et ajustement de la hauteur de la suspension secondaire comme décrites en relation avec le premier mode de réalisation sont réalisées au moins une fois.

Le procédé comprend les étapes successives suivantes :
- mesure de la distance D entre le capteur de distance 126 et le quai 111 par le capteur de distance 126,
- calcul de la différence entre la hauteur du quai et la hauteur du plancher à partir de la distance D,
- ajustement de la hauteur de la suspension secondaire, en fonction de la différence calculée,
- modification supplémentaire de la hauteur du plancher par rapport à l'étape d'ajustement,
- calcul de la modification supplémentaire à partir des mesures supplémentaires, et
- ajustement supplémentaire de la hauteur de la suspension secondaire pour compenser la modification supplémentaire.

Les étapes de mesure de la distance D, de calcul de la différence entre la hauteur du quai et la hauteur du plancher et d'ajustement de la hauteur de la suspension secondaire en fonction de la différence calculée sont similaires à celles qui ont été décrites au regard du premier mode de réalisation.

La modification supplémentaire ΔHₚₗₐ est, par exemple, due à une variation de la charge présente dans la caisse 116.

La variation de la charge entraîne notamment une variation ΔH_{sec} de la hauteur de la suspension secondaire H_{sec} et/ou une variation ΔHₚᵣᵢₘ de la hauteur de la suspension primaire Hₚᵣᵢₘ, la modification supplémentaire de la hauteur du plancher étant la combinaison de ces deux variations de hauteur, soit ΔHₚₗₐ = ΔH_{sec} + ΔHₚᵣᵢₘ.

Le capteur de mesure de la hauteur de la suspension secondaire 150 permet de calculer la variation ΔH_{sec} de la hauteur de la suspension secondaire.

Le capteur de charge 152 permet de mesurer la charge P exercée par la caisse 116 sur le bogie 120.

La charge Q sur la suspension primaire est égale à la somme de la charge P exercée par la caisse 116 sur le bogie 120 et de la masse suspendue Mₛᵤₛₚ entre les étages de suspension primaire et secondaire. La masse suspendue a une valeur prédéterminée et dépend de la configuration du bogie. On peut donc écrire : Q = P + Mₛᵤₛₚ.

La hauteur de la suspension primaire Hₚᵣᵢₘ varie en fonction de la charge Q s'exerçant sur la suspension primaire, plus particulièrement grâce à la relation : Hₚᵣᵢₘ = Hₚᵣᵢₘ⁰ - Q / K avec Hₚᵣᵢₘ⁰ une hauteur de référence de la suspension primaire. La hauteur de référence de la suspension primaire Hₚᵣᵢₘ⁰ correspond ici à la hauteur de la suspension primaire en l'absence de masse à l'intérieur de la caisse 116. Cette hauteur de référence est, par exemple, mesurée pendant une opération de contrôle ou de maintenance.

On obtient alors la relation suivante : Hₚᵣᵢₘ = H_{Prim}⁰ - (P + Mₛᵤₛₚ) / K.

La variation de la hauteur de la suspension primaire est donc liée à la variation de la charge P exercée par la caisse 116 sur le bogie 120 mesurée par le capteur de charge 152 grâce à la relation suivante : ΔHₚᵣᵢₘ = - ΔP / K.

La modification supplémentaire de la hauteur du plancher est donc calculable avec la relation suivante : ΔHₚₗₐ = ΔH_{sec} - ΔP / K avec ΔH_{sec} obtenu grâce au capteur supplémentaire 150, ΔP obtenu grâce au capteur supplémentaire 152 et K un paramètre constant du bogie.

Ainsi le processeur 146 calcule la modification supplémentaire à partir des mesures supplémentaires.

Alternativement, il n'y a qu'une mesure supplémentaire correspondant à une mesure de la hauteur entre l'essieu 128 et la caisse 116. Ladite mesure est, par exemple, réalisée grâce à une première balise placée sur l'essieu 128 et une deuxième balise placée sur la caisse 116 au droit de la première balise selon la direction d'élévation Z, le capteur supplémentaire mesurant la distance entre les deux balises.

Puis le processeur 146 contrôle le dispositif d'actionnement 142 de la suspension secondaire 122 pour compenser la modification supplémentaire.

Si la modification supplémentaire est nulle, la hauteur de la suspension secondaire H_{sec} est maintenue constante.

Lorsque la modification supplémentaire correspond à un abaissement du plancher par rapport au quai 111, le processeur 146 contrôle le dispositif d'actionnement 142 pour augmenter la hauteur de la suspension secondaire H_{sec} d'une valeur donnée. La valeur donnée est ici égale à la valeur absolue de la modification supplémentaire calculée Cela permet ainsi de compenser la modification supplémentaire. Ici le processeur 146 active le dispositif d'actionnement 142 qui déplace l'électrovalve 140 dans une position d'introduction de manière à introduire du fluide dans le coussin 134. Le volume du coussin 134, et ainsi la hauteur de la suspension secondaire H_{sec}, donc la hauteur Hₚₗₐ du plancher 118, augmentent.

Lorsque la modification supplémentaire correspond à une élévation du plancher par rapport au quai 111, le processeur 146 contrôle le dispositif d'actionnement 142 pour diminuer la hauteur de la suspension secondaire H_{sec} d'une valeur donnée. La valeur donnée est ici égale à la valeur absolue de la modification supplémentaire calculée Cela permet ainsi de compenser la modification supplémentaire. Ici le processeur 46 active le dispositif d'actionnement 142 qui déplace l'électrovalve 140 dans une position d'expulsion de manière à expulser du fluide depuis le coussin 134. Le volume du coussin 134, et ainsi la hauteur de la suspension secondaire H_{sec}, donc la hauteur Hₚₗₐ du plancher 118, diminuent.

Pendant la modification supplémentaire, le plancher 118 est déplacé sensiblement perpendiculairement au quai 111, plus précisément à la surface du quai. Le plancher 118 est par exemple déplacé en translation perpendiculairement à ladite surface.

Après la modification supplémentaire, l'ensemble du plancher 118 a une hauteur Hₚₗₐ sensiblement égale à la hauteur de la plate-forme H_{q}. Le plancher 118 s'étend sensiblement dans le même plan que la plate-forme 111.

Les étapes de modification supplémentaire, de calcul de la modification supplémentaire et d'ajustement supplémentaire permettent de réajuster la hauteur du plancher 118 par rapport au quai 111 sans utiliser de nouveau le capteur de distance 126 apte à mesurer la distance D.

Plus particulièrement, les étapes de modification supplémentaire, de calcul de la modification supplémentaire et d'ajustement supplémentaire sont réalisées lorsque le capteur de distance 126 apte à mesurer la distance D entre ledit capteur 126 et le quai 111 n'est plus capable de mesurer ladite distance D.

Dans une première variante, les étapes de mesure de la distance entre le capteur 126 et le quai 111 par le capteur de distance 126, du calcul de la différence entre la hauteur du quai et la hauteur du plancher et de l'ajustement de la hauteur de la suspension secondaire sont réalisées dès que le véhicule entre à quai, c'est-à-dire qu'il s'approche d'un quai pour y stationner. Cela permet notamment de réaliser un ajustement de la hauteur de plancher à la hauteur du quai en particulier. A l'entrée du véhicule à quai, les passagers se tiennent à distance de la bordure du quai pour des raisons de sécurité et ne forment pas d'obstacle intermédiaire entre le capteur de distance 126 et le quai 111 selon la direction de mesure. Une fois que le véhicule est arrêté et que la montée et/ou la descente des passagers sont autorisées, les passagers sont susceptibles d'empêcher la mesure de la distance D par le capteur 126. Ainsi, les étapes de modification supplémentaire, de calcul de la modification supplémentaire et d'ajustement supplémentaire sont réalisées lorsque le véhicule stationne à quai. Lesdites étapes supplémentaires sont, par exemple, réalisées à intervalle régulier compris entre 100 millisecondes (ms) et 500 ms lorsque le véhicule est arrêté à quai. Ces étapes supplémentaires permettent de continuer à ajuster la hauteur du plancher en fonction de la variation de charge sans nécessiter la présence du capteur 126 dont la mesure est susceptible d'être faussée.

Dans une deuxième variante, les étapes de mesure de la distance entre le capteur 126 et le quai 111 par le capteur de distance 126, du calcul de la différence entre la hauteur du quai et la hauteur du plancher et de l'ajustement de la hauteur de la suspension secondaire sont réalisées dès que le véhicule entre à quai et également pendant que le véhicule stationne lorsqu'aucun obstacle intermédiaire n'est détecté. Il est, par exemple, considéré qu'un obstacle intermédiaire est détecté lorsque le capteur de distance 126 enregistre une importante variation de la distance D en peu de temps, ce qui correspondrait à un obstacle intermédiaire se plaçant le long de la direction de mesure ou à un mouvement dudit obstacle. On appelle importante variation une variation supérieure à 100 mm dans la mesure où les variations dues à une variation de charge sont usuellement très inférieures à cette valeur. Lorsqu'un obstacle intermédiaire est détecté, les étapes de modification supplémentaire, de calcul de la modification supplémentaire et d'ajustement supplémentaire sont réalisées pour permettre de continuer à ajuster la hauteur du plancher. Lesdites étapes supplémentaires sont, par exemple, réalisées à intervalle régulier compris entre 20 secondes à 60 secondes tant qu'un obstacle intermédiaire est détecté.

Un procédé de commande d'après l'invention, que ce soit dans le premier mode de réalisation ou le deuxième mode, permet notamment de réajuster le calcul de la différence à l'environnement extérieur directement mesuré grâce au capteur de distance 26, 126. L'ajustement de la suspension secondaire réalisé est ainsi le plus proche possible de la réalité, de sorte à minimiser la différence de hauteur entre le quai et le plancher.

Ce procédé de commande prend en compte la possibilité d'avoir des quais de hauteurs variables, par exemple le long d'un trajet passant par plusieurs stations, l'usure du véhicule et la masse portée par le véhicule, par exemple, au moins à l'entrée du véhicule à quai.

Le deuxième mode de réalisation permet par ailleurs un ajustement supplémentaire lorsque l'utilisation du capteur de distance n'est pas possible.

Ainsi, le procédé de commande d'après les différents modes de réalisation selon l'invention permet un meilleur ajustement de la hauteur de plancher par rapport au quai, ce qui permet notamment de faciliter l'accessibilité au véhicule.

## Revendications

1. Procédé de commande de la hauteur d'un plancher (18, 118) d'une voiture (14 ; 114) d'un véhicule (10 ; 110) par rapport à un quai (11 ; 111), la voiture (14 ; 114) comprenant une caisse (16 ; 116) comprenant le plancher (18 ; 118), au moins un bogie (20 ; 120) et au moins une suspension secondaire (22 ; 122) interposée entre le bogie (20 ; 120) et la caisse (16 ; 116), la caisse (16 ; 116) étant pourvue d'un capteur de distance (26 ; 126), le capteur (26 ; 126) étant apte à mesurer une distance (D) entre ledit capteur (26 ; 126) et un quai (11 ; 111) lorsque le véhicule est stationné à proximité dudit quai (11 ; 111),
le procédé comprenant les étapes suivantes :
- mesure de la distance (D) entre le capteur de distance (26 ; 126) et le quai (11 ; 111) par le capteur de distance (26 ; 126),
- calcul de la différence entre la hauteur du quai (H_{q}) et la hauteur du plancher (Hₚₗₐ) à partir de la distance (D) mesurée entre le capteur de distance (26 ; 126) et le quai (11 ; 111), la hauteur du quai (H_{q}) et la hauteur du plancher (Hₚₗₐ) étant avantageusement prises par rapport à un même repère, et
- ajustement de la hauteur de la suspension secondaire (H_{sec}), en fonction de la différence,
**caractérisé en ce que**, après l'ajustement, la hauteur (Hₚₗₐ) de l'ensemble du plancher (18, 118) est sensiblement égale à la hauteur du quai (H_{q}).

2. Procédé de commande selon la revendication 1, dans lequel, durant l'ajustement, le plancher (18, 118) est déplacé sensiblement perpendiculairement au quai (11,111).

3. Procédé de commande selon la revendication 1 ou 2, dans lequel le plancher (18, 118) s'étend sensiblement dans le même plan que la plate-forme (11, 111).

4. Procédé de commande selon l'une quelconque des revendications 1 à 3, dans lequel le capteur de distance (26 ; 126) est positionné pour être au-dessus du quai suivant une direction d'élévation du quai quelle que soit la hauteur de la suspension secondaire et est, de préférence, un capteur laser, ultrason ou optique.

5. Procédé de commande selon l'une quelconque des revendications 1 à 4, dans lequel l'ajustement de la hauteur de la suspension secondaire (H_{sec}) est calculé pour que la hauteur du plancher (Hₚₗₐ) soit sensiblement égale à la hauteur du quai (H_{q}).

6. Procédé de commande selon l'une quelconque des revendications 1 à 5, dans lequel le véhicule comprend un processeur (46 ; 146) apte à faire le calcul de la différence entre la hauteur du quai (H_{q}) et la hauteur de plancher (Hₚₗₐ) à partir de la distance (D) mesurée, le processeur activant un dispositif d'actionnement (42 ; 142) d'un dispositif de contrôle (36 ; 136) de la hauteur de la suspension secondaire (H_{sec}) lors de l'étape d'ajustement.

7. Procédé de commande selon la revendication 6, dans lequel la suspension secondaire (22 ; 122) comprend au moins un coussin (34 ; 134) et en ce que le dispositif de contrôle (36 ; 136) de la hauteur de la suspension secondaire (H_{sec}) comprend au moins une électrovalve (40 ; 140) reliée au dispositif d'actionnement (42 ; 142) activable par le processeur (46 ; 146), l'électrovalve (40 ; 140) étant apte à introduire du fluide dans le coussin (34 ; 134) et/ou à expulser du fluide depuis le coussin (34 ; 134).

8. Procédé de commande selon l'une quelconque des revendications 1 à 7, comprenant les étapes suivantes :
- modification supplémentaire de la hauteur du plancher (Hₚₗₐ) par rapport à l'étape d'ajustement,
- calcul de la modification supplémentaire à partir d'au moins une mesure supplémentaire, la mesure supplémentaire étant différente de la mesure de la distance (D) entre le capteur de distance (126) et le quai (111), et
- ajustement supplémentaire de la hauteur de la suspension secondaire (H_{sec}) pour compenser la modification supplémentaire.

9. Procédé de commande selon la revendication 8, dans lequel la mesure supplémentaire est réalisée par un capteur de mesure de la hauteur de la suspension secondaire (150) et/ou par un capteur de mesure de la variation de la hauteur de la suspension secondaire et/ou par un capteur de charge de la caisse (152).

10. Procédé de commande selon la revendication 8 ou 9, dans lequel les étapes de modification supplémentaire, de calcul de la modification supplémentaire et d'ajustement supplémentaire sont réalisées lorsque le capteur de distance (126) apte à mesurer la distance (D) entre ledit capteur (126) et le quai (111) est incapable de mesurer ladite distance (D).

11. Procédé de commande selon l'une quelconque des revendications 8 à 10, dans lequel les étapes de mesure de la distance (D) entre le capteur de distance (126) et le quai (111) par le capteur de distance (126), de calcul de la différence entre la hauteur du quai (H_{q}) et la hauteur du plancher (Hₚₗₐ) et d'ajustement de la hauteur de la suspension secondaire (H_{sec}) sont réalisées lorsque le véhicule (110) entre à quai et dans lequel les étapes de modification supplémentaire, de calcul de la modification supplémentaire et d'ajustement supplémentaire sont réalisées lorsque le véhicule (110) stationne à quai.

12. Véhicule (10 ; 110) comprenant au moins une voiture (14 ; 114) comprenant une caisse (16 ; 116) comprenant un plancher (18 ; 118), au moins un bogie (20 ; 120) et au moins une suspension secondaire (22 ; 122) interposée entre le bogie (20 ; 120) et la caisse (16 ; 116), la caisse (16 ; 116) étant pourvu d'un capteur de distance (26 ; 126), le capteur de distance (26 ; 126) étant apte à mesurer une distance (D) entre ledit capteur de distance (26 ; 126) et un quai (11 ; 111) lorsque le véhicule (10 ; 110) est stationné à proximité du quai (11 ; 111), le véhicule comprenant un processeur (46 ; 146) apte à faire le calcul de la différence entre la hauteur du quai (H_{q}) et la hauteur de plancher (Hₚₗₐ) à partir de la distance (D) mesurée, le processeur étant apte à activer un dispositif d'actionnement (42 ; 142) d'un dispositif de contrôle (36 ; 136) de la hauteur de la suspension secondaire (H_{sec}) de sorte à ajuster la hauteur de la suspension secondaire en fonction de la différence, de sorte qu'après ajustement, la hauteur de l'ensemble du plancher est sensiblement égale à la hauteur du quai.

## Patentansprüche

1. Steuerverfahren Steuern der Höhe eines Bodens (18, 118) eines Wagens (14; 114) eines Fahrzeugs (10; 110) in Bezug auf einen Bahnsteig (11; 111), der Wagen (14; 114) umfassend einen Wagenkasten (16; 116), der den Boden (18; 118) umfasst, mindestens ein Drehgestell (20; 120) und mindestens eine Sekundärfederung (22; 122), die zwischen dem Boden (18; 118) und dem Drehgestell (20; 120) eingefügt ist, wobei der Wagenkasten (16; 116) mit einem Abstandssensor (26; 126) versehen ist, wobei der Sensor (26; 126) in geeignet ist, um einen Abstand (D) zwischen dem Sensor (26; 126) und einem Bahnsteig (11; 111) zu messen, wenn das Fahrzeug in der Nähe des Bahnsteigs (11; 111) angehalten ist,
das Verfahren umfassend die folgenden Schritte:
- Messen des Abstands (D) zwischen dem Abstandssensor (26; 126) und dem Bahnsteig (11; 111) durch den Abstandssensor (26; 126),
- Berechnen der Differenz zwischen der Höhe des Bahnsteigs (H_{q}) und der Höhe des Bodens (Hₚₗₐ) anhand des Abstands (D), der zwischen dem Abstandssensor (26; 126) und dem Bahnsteig (11; 111) gemessen wird, wobei die Höhe des Bahnsteigs (H_{q}) und die Höhe des Bodens (Hₚₗₐ) vorteilhafterweise in Bezug auf eine selbe Markierung genommen werden, und
- Anpassen der Höhe der Sekundärfederung (H_{sec}), abhängig von der Differenz,
**dadurch gekennzeichnet, dass** nach der Anpassung die Höhe (Hₚₗₐ) des gesamten Bodens (18, 118) im Wesentlichen gleich wie die Höhe des Bahnsteigs (H_{q}) ist.

2. Steuerungsverfahren nach Anspruch 1, wobei während der Anpassung der Boden (18, 118) im Wesentlichen senkrecht zu dem Bahnsteig (11, 111) bewegt wird.

3. Steuerungsverfahren nach Anspruch 1 oder 2, wobei sich der Boden (18, 118) im Wesentlichen in der gleichen Ebene wie die Plattform (11, 111) erstreckt.

4. Steuerungsverfahren nach einem der Ansprüche 1 bis 3, wobei der Abstandssensor (26; 126) positioniert ist, um sich unabhängig von der Höhe der Sekundärfederung entlang einer Höhenrichtung des Bahnsteigs über dem Bahnsteig zu befinden, und vorzugsweise ein Laser-, Ultraschall- oder optischer Sensor ist.

5. Steuerungsverfahren nach einem der Ansprüche 1 bis 4, wobei die Anpassung der Höhe der Sekundärfederung (H_{sec}) berechnet wird, damit die Höhe des Bodens (Hₚₗₐ) im Wesentlichen gleich wie die Höhe des Bahnsteigs (H_{q}) ist.

6. Steuerungsverfahren nach einem der Ansprüche 1 bis 5, wobei das Fahrzeug einen Prozessor (46; 146) umfasst, der geeignet ist, um die Berechnung der Differenz zwischen der Höhe des Bahnsteigs (H_{q}) und der Höhe des Bodens (Hₚₗₐ) anhand des gemessenen Abstands (D) zu berechnen, wobei der Prozessor während des Anpassungsschritts eine Betätigungseinrichtung (42; 142) einer Steuervorrichtung (36; 136) für die Höhe der Sekundärfederung (H_{sec}) aktiviert.

7. Steuerungsverfahren nach Anspruch 6, wobei die Sekundärfederung (22; 122) mindestens ein Kissen (34; 134) umfasst und dass die Steuervorrichtung (36; 136) für die Höhe der Sekundärfederung (H_{sec}) mindestens ein Magnetventil (40; 140) umfasst, das mit der durch den Prozessor (46; 146) aktivierbaren Betätigungsvorrichtung (42; 142) verbunden ist, wobei das Magnetventil (40; 140) geeignet ist, um Fluid in das Kissen (34; 134) einzuleiten und/oder um Fluid aus dem Kissen (34; 134) auszustoßen.

8. Steuerungsverfahren nach einem der Ansprüche 1 bis 7, ferner umfassend die folgenden Schritte:
- zusätzliches Modifizieren der Höhe des Bodens (Hₚₗₐ) in Bezug auf den Anpassungsschritt,
- Berechnen der zusätzlichen Modifikation anhand mindestens einer zusätzlichen Messung, wobei sich die zusätzliche Messung von der Messung des Abstands (D) zwischen dem Abstandssensor (126) und dem Bahnsteig (111) unterscheidet, und
- zusätzliches Anpassen der Höhe der Sekundärfederung (H_{sec}), um die zusätzliche Modifikation auszugleichen.

9. Steuerungsverfahren nach Anspruch 8, wobei die zusätzliche Messung durch einen Sensor zum Messen der Höhe der Sekundärfederung (150) und/oder durch einen Sensor zum Messen der Änderung der Höhe der Sekundärfederung und/oder durch einen Sensor zum Messen der Belastung des Wagenkastens (152) durchgeführt wird.

10. Steuerungsverfahren nach Anspruch 8 oder 9, wobei die Schritte der zusätzlichen Modifikation, der Berechnung der zusätzlichen Modifikation und der zusätzlichen Anpassung durchgeführt werden, wenn der Abstandssensor (126), der geeignet ist, um den Abstand (D) zwischen dem Sensor (126) und dem Bahnsteig (111) zu messen, nicht in der Lage ist, den Abstand (D) zu messen.

11. Steuerungsverfahren nach einem der Ansprüche 8 bis 10, wobei die Schritte des Messens des Abstands (D) zwischen dem Abstandssensor (126) und dem Bahnsteig (111) durch den Abstandssensor (126), des Berechnens der Differenz zwischen der Höhe des Bahnsteigs (H_{q}) und der Höhe des Bodens (Hₚₗₐ) und des Anpassens der Höhe der Sekundärfederung (H_{sec}) durchgeführt werden, wenn das Fahrzeug (110) an dem Bahnsteig ankommt, und wobei die Schritte einer zusätzlichen Modifikation, einer Berechnung der zusätzlichen Modifikation und einer zusätzlichen Anpassung durchgeführt werden, wenn das Fahrzeug (110) an dem Bahnsteig hält.

12. Fahrzeug (10; 110), umfassend mindestens einen Wagen (14; 114), umfassend einen Wagenkasten (16; 116), umfassend einen Boden (18; 118), mindestens ein Drehgestell (20; 120) und mindestens eine Sekundärfederung (22; 122); die zwischen dem Drehgestell (20; 120) und dem Kasten (16; 116) angeordnet ist, wobei der Kasten (16; 116) mit einem Abstandssensor (26; 126) versehen ist, wobei der Abstandssensor (26; 126) geeignet ist, um einen Abstand (D) zwischen dem Abstandssensor (26; 126) und einem Bahnsteig (11; 111) zu messen, wenn das Fahrzeug (10; 110) in der Nähe des Bahnsteigs (11; 111) angehalten ist, das Fahrzeug umfassend einen Prozessor (46; 146), der geeignet ist, um die Berechnung der Differenz zwischen der Höhe des Bahnsteigs (H_{q}) und der Höhe des Bodens (Hₚₗₐ) anhand des gemessenen Abstands (D) durchzuführen, wobei der Prozessor geeignet ist, um eine Betätigungsvorrichtung (42; 142) einer Steuervorrichtung (36; 136) der Höhe der Sekundärfederung (H_{sec}) zu aktivieren, um die Höhe der Sekundärfederung abhängig von der Differenz anzupassen, sodass nach Anpassung die Höhe des gesamten Bodens im Wesentlichen gleich wie die Höhe des Bahnsteigs ist.

## Claims

1. A method for controlling the height of a floor (18, 118) of a car (14; 114) of a vehicle (10; 110) relative to a platform (11; 111), the car (14; 114) comprising a body (16; 116) comprising the floor (18; 118), at least one bogie (20; 120) and at least one secondary suspension (22; 122) inserted between the bogie (20; 120) and the body (16; 116), the body (16; 116) being provided with a distance sensor (26; 126), the sensor (26; 126) being able to measure a distance (D) between said sensor (26; 126) and a platform (11; 111) when the vehicle is parked near said platform (11; 111),
the method comprising the following steps:
- measuring the distance (D) between the distance sensor (26; 126) and the platform (11; 111) via the distance sensor (26; 126),
- calculating the difference between the height of the platform (H_{q}) and the height of the floor (Hₚₗₐ) from the distance (D) measured between the distance sensor (26; 126) and the platform (11; 111), the height of the platform (H_{q}) and the height of the floor (Hₚₗₐ) being advantageously taken relative to a same reference point, and
- adjusting the height of the secondary suspension (H_{sec}), based on the difference,
**characterized in that**, after the adjusting, the height (Hₚₗₐ) of the entire floor (18; 118) is substantially equal to the height of the platform (H_{q}).

2. The control method according to claim 1, wherein, during the adjusting, the floor (18; 118) is moved substantially perpendicular to the platform (11; 111).

3. The control method according to claim 1 or 2, wherein the floor (18; 118) extends in approximately the same plane as the platform (11; 111).

4. The control method according to any one of claims 1 to 3, wherein the distance sensor (26; 126) is positioned to be above the platform in an elevation direction of the platform irrespective of the height of the secondary suspension, and is preferably a laser, ultrasound or optical sensor.

5. The control method according to any one of claims 1 to 4, wherein the adjustment of the height of the secondary suspension (H_{sec}) is calculated so that the height of the floor (Hₚₗₐ) is substantially equal to the height of the platform (H_{q}).

6. The control method according to any one of claims 1 to 5, wherein the vehicle comprises a processor (46; 146) able to calculate the difference between the height of the platform (H_{q}) and the height of the floor (Hₚₗₐ) from the measured distance (D), the processor activating an actuating device (42; 142) of a device for controlling (36; 136) the height of the secondary suspension (H_{sec}) during the actuating step.

7. The control method according to claim 6, wherein the secondary suspension (22; 122) comprises at least one cushion (34; 134) and in that the device for controlling (36; 136) the height of the secondary suspension (H_{sec}) comprises at least one solenoid valve (40; 140) connected to the actuating device (42; 142) able to be activated by the processor (46; 146), the solenoid valve (40; 140) being able to introduce fluid into the cushion (34; 134) and/or to expel fluid from the cushion (34; 134).

8. A control method according to any one of claims 1 to 7, comprising the following steps:
- additional modification of the height of the floor (Hₚₗₐ) relative to the adjusting step,
- calculating the additional modification from at least one additional measurement, the additional measurement being different from the measurement of the distance (D) between the distance sensor (126) and the platform (111), and
- performing an additional adjustment of the height of the secondary suspension (H_{sec}) to compensate the additional modification.

9. The control method according to claim 8, wherein the additional measurement is done by a sensor for measuring the height of the secondary suspension (150) and/or by a sensor for measuring the variation of the height of the secondary suspension and/or by a load sensor of the body (152).

10. The control method according to claim 8 or 9, wherein the steps for additional modification, calculation of the additional modification and additional adjustment are carried out when the distance sensor (126) capable of measuring the distance (D) between said sensor (126) and the platform (111) is incapable of measuring said distance (D).

11. The control method according to any one of claims 8 to 10, wherein the steps for measuring the distance (D) between the distance sensor (126) and the platform (111) via the distance sensor (126), calculating the difference between the height of the platform (H_{q}) and the height of the floor (Hₚₗₐ) and adjusting the height of the secondary suspension (H_{sec}) are carried out when the vehicle (110) enters the platform and wherein the steps for additional modification, calculation of the additional modification and additional adjustment are carried out when the vehicle (110) parks at the platform.

12. A vehicle (10; 110) comprising at least one car (14; 114) comprising a body (16; 116) comprising a floor (18; 118), at least one bogie (20; 120) and at least one secondary suspension (22; 122) inserted between the bogie (20; 120) and the body (16; 116), the body (16; 116) being provided with a distance sensor (26; 126), the distance sensor (26; 126) being able to measure a distance (D) between said distance sensor (26; 126) and a platform (11; 111) when the vehicle (10; 110) is parked near the platform (11; 111), the vehicle comprising a processor (46; 146) capable of performing the calculation of the difference between the height of the platform (H_{q}) and the height of the floor (Hₚₗₐ) from the measured distance (D), the processor being capable of activating an actuating device (42; 142) of a device (36; 136) for controlling the height of the secondary suspension (H_{sec}) such as to adjust the height of the secondary suspension based on the difference, such that, after the adjusting, the height of the entire floor is substantially equal to the height of the platform.
